# EUROPEAN PATENT SPECIFICATION

(11) **EP 4 321 222 B1**
(45) Date of publication and mention of the grant of the patent: **29.10.2025**
(21) Application number: 23187803.4
(22) Date of filing: 26.07.2023
(51) Int. Cl.: B01D 53/22, B64D 13/02, B64D 37/32, B64D 13/06

(54) **HALON ALTERNATIVES FOR AIRCRAFT FIRE SUPPRESSION**
HALON-ALTERNATIVEN ZUR FLUGZEUGBRANDUNTERDRÜCKUNG
ALTERNATIVES HALON POUR L'EXTINCTION D'INCENDIE D'AÉRONEF

(30) Priority: 28.07.2022 US 202217876059
(43) Date of publication of application: 14.02.2024
(73) Proprietor: Hamilton Sundstrand Corporation, Charlotte, NC 28217-4578 (US)
(72) Inventor: CORDATOS, Haralambos, Colchester, 06415 (US); RHEAUME, Jonathan, West Hartford, 06119 (US)
(74) Representative: Dehns

(56) References cited:
- US-A1- 2005 092 177
- US-A1- 2021 031 938
- US-A1- 2021 322 808

## Description

### BACKGROUND

The subject matter disclosed herein generally relates to aircraft fire suppression systems, and more specifically, to fire suppression systems that use alternatives to Halon.

In general, cargo fire suppression systems utilize a Halon based-low rate discharge system. Halon is slowly being phased out of cargo fire suppression systems. Thus, new cargo fire suppression systems may be desirable.
US2021322808A1 relates to aircraft tools, and more specifically, to fire suppression systems for aircraft. US2005092177A1 relates generally to air separation systems and methods and particularly those that supply nitrogen enriched air to spaces to be inerted, such as the ullage space in an aircraft fuel tank. US2021031938A1 relates to systems for generating and providing inert gas, oxygen, and/or power such as may be used on vehicles (e.g., aircraft, military vehicles, heavy machinery vehicles, sea craft, ships, submarines, etc.) or stationary applications such as fuel storage facilities.

### BRIEF SUMMARY

According to one embodiment, fire suppression systems for aircraft are provided. The fire suppression systems include a pressurized air source, a first air separation module configured to receive pressurized air from the pressurized air source, the first air separation module arranged to generate inert gas from the received pressurized air and supply the generated inert gas to a fuel tank of the aircraft, and a second air separation module configured to receive pressurized air from the pressurized air source, the second air separation module arranged to generate inert gas from the received pressurize air and supply the generated inert gas to a protected space of the aircraft. The second air separation module comprises a membrane having inherent microporosity. A controller is in operable communication with each of the first air separation module and the second air separation module, the controller configured to direct the pressurized air to the first air separation module and direct no pressurized air to the second air separation module during a first state of operation, and in response to a fire detected in the protected space, direct at least a portion of the pressurized air to the second air separation module and supply an inert gas from the second air separation module to the protected space in a second state of operation.

In addition to one or more of the features described above, or as an alternative, further embodiments of the fire suppression systems may include that the first air separation module comprises at least one of a polyimide membrane, a polysulfone membrane, or a poly-phenylene oxide membrane.

In addition to one or more of the features described above, or as an alternative, further embodiments of the fire suppression systems may include that the controller is configured to control a first valve configured to control flow of pressurized air to the first air separation module and a second valve configured to control flow of pressurized air to the second air separation module.

In addition to one or more of the features described above, or as an alternative, further embodiments of the fire suppression systems may include that the second state of operation is a low rate discharge fire suppression operation.

In addition to one or more of the features described above, or as an alternative, further embodiments of the fire suppression systems may include a product gas cooler arranged between the second air separation module and the protected space.

In addition to one or more of the features described above, or as an alternative, further embodiments of the fire suppression systems may include a cooling heat exchanger arranged between the pressurized air source and the first air separation module.

In addition to one or more of the features described above, or as an alternative, further embodiments of the fire suppression systems may include that the second air separation module is arranged upstream from the cooling heat exchanger.

In addition to one or more of the features described above, or as an alternative, further embodiments of the fire suppression systems may include that the second air separation module is arranged downstream from the cooling heat exchanger.

In addition to one or more of the features described above, or as an alternative, further embodiments of the fire suppression systems may include that the pressurized air source is a portion of an engine of the aircraft, the system comprising a precooler arranged between the pressurized air source and each of the first air separation module and the second air separation module.

In addition to one or more of the features described above, or as an alternative, further embodiments of the fire suppression systems may include that the membrane having inherent microporosity has at least one of (i) an oxygen permeance of 100 GPU or greater or (ii) a selectivity ratio of 6 or greater.

In addition to one or more of the features described above, or as an alternative, further embodiments of the fire suppression systems may include that the membrane having inherent microporosity comprises a membrane formed from Thermally Rearranged polymers.

In addition to one or more of the features described above, or as an alternative, further embodiments of the fire suppression systems may include that the membrane having inherent microporosity comprises a membrane formed from Polymers of Intrinsic Microporosity.

In addition to one or more of the features described above, or as an alternative, further embodiments of the fire suppression systems may include that, in the second state of operation, the controller is configured to direct a portion of the pressurized air to the first air separation module and a portion of the pressurized air to the second air separation module.

In addition to one or more of the features described above, or as an alternative, further embodiments of the fire suppression systems may include that an inert gas generated by the first air separation module is mixed with an inert gas generated by the second air separation module prior to being supplied to the protected space.

In addition to one or more of the features described above, or as an alternative, further embodiments of the fire suppression systems may include a high rate discharge system comprising Halon to be dispensed into the protected space in response to the fire detection.

In addition to one or more of the features described above, or as an alternative, further embodiments of the fire suppression systems may include that after performing a high rate discharge operation using the high rate discharge system, the second air separation module is controlled to direct inert gas to the protected space in a low rate discharge operation.

In addition to one or more of the features described above, or as an alternative, further embodiments of the fire suppression systems may include that the inert gas generated by the second air separation module has an oxygen content of 15% or less.

In accordance with some embodiments, methods of supplying inerting gas to a fire-protected space of an aircraft for fire suppression are provided. The methods include extracting pressurized air from a pressurized air source, directing the pressurized air to a first air separation module configured to generate inert gas and supply the generated inert gas to a fuel tank of the aircraft during a first state of operation, and in response to a fire detected in a protected space of the aircraft, directing at least a portion of the pressurized air to a second air separation module and supplying an inert gas from the second air separation module to the protected space in a second state of operation, wherein the second air separation module comprises a membrane having inherent microporosity.

In addition to one or more of the features described above, or as an alternative, further embodiments of the methods may include that, in the second state of operation, the method comprises directing a portion of the pressurized air to the first air separation module and a portion of the pressurized air to the second air separation module.

In addition to one or more of the features described above, or as an alternative, further embodiments of the methods may include performing a high rate discharge operation in response to the detected fire prior to operating the second air separation module.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION

The following descriptions should not be considered limiting in any way. With reference to the accompanying drawings, like elements are numbered alike:
FIG. 1A is a schematic illustration of an aircraft that can incorporate various embodiments of the present disclosure;
FIG. 1B is a schematic illustration of a bay section of the aircraft of FIG. 1A;
FIG. 2 is a schematic illustration of a system configuration of an inerting gas system for an aircraft that may employ embodiments of the present disclosure;
FIG. 3 is a schematic illustration of an aircraft and inerting system in accordance with an embodiment of the present disclosure;
FIG. 4 is a schematic illustration of an aircraft and inerting system in accordance with an embodiment of the present disclosure; and
FIG. 5 is a schematic diagram of an aircraft and inerting system in accordance with an embodiment of the present disclosure.

### DETAILED DESCRIPTION

A detailed description of one or more embodiments of the disclosed apparatus and method are presented herein by way of exemplification and not limitation with reference to the Figures.

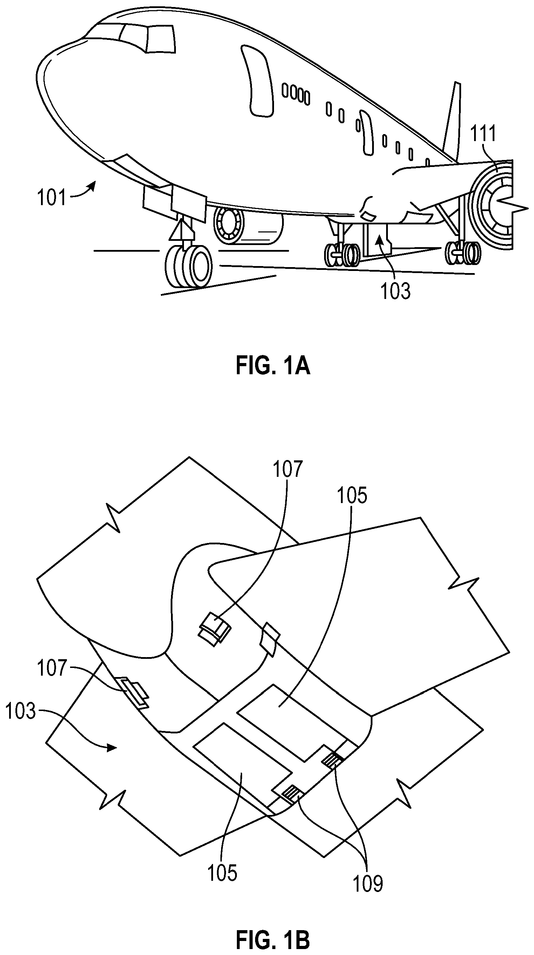

FIGS. 1A-1B are schematic illustrations of an aircraft 101 that can employ one or more embodiments of the present disclosure. As shown in FIGS. 1A-1B, the aircraft 101 includes bays 103 beneath a center wing box. The bays 103 can contain and/or support one or more components of the aircraft 101. For example, in some configurations, the aircraft 101 can include environmental control systems and/or fuel tank inerting systems within the bays 103. As shown in FIG. 1B, the bays 103 includes bay doors 105 that enable installation and access to one or more components (e.g., environmental control systems, fuel tank inerting systems, etc.). During operation of environmental control systems and/or fuel tank inerting systems of the aircraft 101, air that is external to the aircraft 101 can be provided to such systems within the bay doors 105 through one or more ram air inlets 107. The air may then flow through the systems to be processed and supplied to various components or locations within the aircraft 101 (e.g., flight deck, passenger cabin, etc.). Some air may be exhausted through one or more ram air exhaust outlets 109.

Also shown in FIG. 1A, the aircraft 101 includes one or more engines 111. The engines 111 are typically mounted on wings of the aircraft 101, but may be located at other locations depending on the specific aircraft configuration. In some aircraft configurations, air can be bled from the engines 111 and supplied to environmental control systems and/or fuel tank inerting systems, as will be appreciated by those of skill in the art.

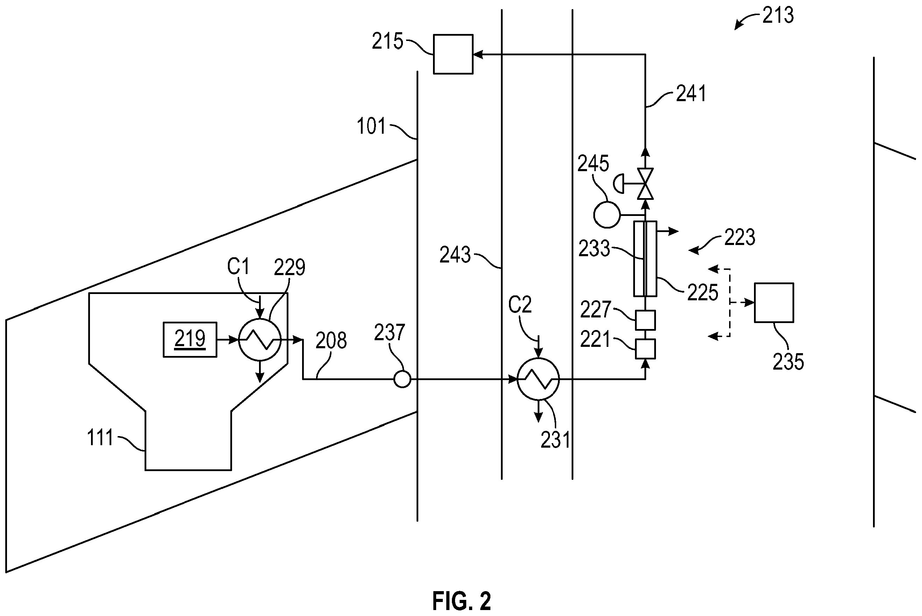

Turning now to FIG. 2, a schematic illustration of an inerting system 213 that is not part of the present invention but that may incorporate elements of the present disclosure is shown. The inerting system 213 is configured to generate and supply a source of inerting gas to another component, such as a fuel tank 215 on an aircraft 101. The inerting system 213 includes a supply of pressurized air 208 provided (i.e., extracted) from a pressurized air source 219 which is employed to generate an inerting gas 241. The inerting gas 241 may be fully inert or partially inert. In the illustrated non-limiting example, the pressurized air source 219 includes one or more engines 111 of the aircraft 101, or a bleed port thereof, as will be appreciated by those of skill in the art. In some non-limiting examples, on the engine 111, the pressurized air source 219 may be a compressor section of the engine 111 (e.g., low pressure compressor). In such examples, the pressurized air 208 may be bled from a compressor section of the engine 111. In an example, the pressurized air source 219 is at least a part of an engine 111 of the aircraft 101. However, examples where the pressurized air source 219 is not an engine are also contemplated herein. For example, in some non-limiting examples, the pressurized air source 219 includes a compressor configured to pressurize ambient air as it passes therethrough. The compressor may be driven by a mechanical, pneumatic, hydraulic, or electrical input, as will be appreciated by those of skill in the art.

Within the inerting system 213, the pressurized air 208 may flow through a filter 227 before being provided to an on-board inert gas generating system (OBIGGS) 223, including at least one air separation module (ASM) 225 for removing oxygen from the pressurized air 208 supplied from the pressurized air source 219. The filter 227 may comprise one or more filters, such as a coalescing filter to remove particulate contaminants and/or moisture and a carbon filter for removing hydrocarbons from the pressurized air 208 supplied from the pressurized air source 219. Alternatively, or in addition, the pressurized air 208 may pass through an ozone conversion device 221 that is configured to reduce the ozone concentration of the pressurized air 208 before being provided to the OBIGGS 223. Although the filter 227 is illustrated as being downstream of the ozone conversion device 221 such configuration is not to be limiting. For example, the filter 227 may be arranged upstream of the ozone conversion device 221. Further, it should be understood that both the filter 227 and the ozone conversion device 221 may be arranged at any relative position within the inerting system 213, upstream from the OBIGGS 223.

It may be beneficial to maintain or reduce the temperature of the pressurized air 208 below a maximum allowable temperature to maintain the safety of the downstream components, as well as the safety of the fuel tank 215. Because the pressurized air 208 from the pressurized air source 219 is generally extremely hot, the pressurized air 208 is typically cooled before being processed (e.g., within the filter 227, ozone conversion device 221, and/or OBIGGS 223). Accordingly, one or more cooling devices, such as heat exchangers, may be used to control the temperature of the pressurized air within the inerting system 213 before being provided to the OBIGGS 223. For example, as illustrated in FIG. 2, the inerting system 213 includes a precooler 229 that arranges the pressurized air 208 in a heat transfer relationship with a secondary cooling flow C1, such as fan bypass air from the pressurized air source 219. Within the precooler 229, the pressurized air 208 may be reduced to a temperature less than or equal to about 200° C. The inerting system 213 may additionally include an ASM cooling heat exchanger 231 configured to further cool the pressurized air 208 prior to supplying the air to the OBIGGS 223. In some such examples, a secondary cooling flow C2, such as ambient air supplied through a ram air duct 243, is arranged in a heat transfer relationship with the pressurized air 208 within the ASM cooling heat exchanger 231 and is configured to reduce the temperature of the pressurized air 208 to a desired temperature, for example, less than or equal to about 80° C at sea level on a hot day.

In some examples, the ambient airflow used as the secondary cooling flow C2 can be directed within the aircraft body by a low-drag air inlet (e.g., National Advisory Committee for Aeronautics (NACA) duct or NACA scoop), etc. In some examples, the secondary cooling flow C2 may be conditioned air from an environmental control system of the aircraft 101. In some examples, the secondary cooling flow C2 can be cooled by an air cycle machine such as an environmental control system of the aircraft 101. In some examples, the secondary cooling flow C2 utilizes a vapor cycle machine for cooling. In some examples, the secondary cooling flow C2 can be a fuselage outflow to utilize airflow from within a passenger cabin, cargo hold, or flight deck of the aircraft. In some examples, the secondary cooling flow C2 can be fan bleed air from an engine of the aircraft. In some examples, the secondary cooling flow C2 can be a combination or hybrid of the airflow sources described herein.

In some examples, airflow sources can be selectively provided and combined to provide a desired secondary cooling flow C2. Typical air separation modules, such as ASM 225, operate using pressure differentials to achieve a desired air separation. Such systems require a high-pressure pneumatic source to drive the separation process across a membrane 233 of the ASM 225.

The inerting system 213, as shown, includes a controller 235 that is operably coupled to one or more of the components of the inerting system 213. For example, the controller 235 may be configured to operate a flow control device 237 to control the flow rate of the pressurized air 208 through the inerting system 213. It will be appreciated that the flow control device 237 may be arranged and located at any position along a flow path of air through the inerting system 213. In addition, the controller 235 may be associated with an external source to initiate and terminate a secondary fluid within the ASM 225, as will be appreciated by those of skill in the art. Further, the controller 235 may be operably connected to one or more sensors 245, such as oxygen sensors for measuring the amount of oxygen in the pressurized air 208 and/or the inerting gas 241 that is provided to the fuel tank 215, or a sensor for monitoring one or more conditions associated with the fuel tank 215, such as a flow rate, quantity of fuel, and fuel demand. The controller 235 may be configured to receive an output from the sensors to adjust one or more operating conditions of the inerting system 213.

In some examples, a portion of the pressurized air 208 may be extracted and/or supplied to various other components or systems of the aircraft 101. For example, a portion of the pressurized air 208 may be supplied to an anti-ice system within or on the wings of the aircraft 101. Further, a portion (e.g., a majority in some systems) may be supplied to an environmental control system or fire suppression system of the aircraft 101, as will be appreciated by those of skill in the art. The remainder may then flow through the inerting system 213, as described above, to generate the inerting gas 241.

As is known in the art, Halon may be utilized for aircraft fire suppression systems. Aircraft fire suppression may have multiple stages. In one example, an aircraft fire suppression may have two stages. For example, in response to a detected fire or overheat detection event in a protected space of the aircraft 101 (e.g., cargo bay), the fire suppression system may operate in a first stage followed by a second stage, in order to put down and suppress the detected fire. In such a first stage, a large and quick inrush of Halon may be injected into the protected space of the aircraft 101 (i.e., fire suppression high rate of discharge or High Rate Discharge ("HRD")). This is then followed by a second stage of sustained low rate discharge of Halon (i.e., fire suppression low rate of discharge or Low Rate Discharge ("LRD")). The protected space may include but is not limited to cargo areas, equipment bays, electronics compartments, or any other space(s) that may be outfitted with a fire protection system onboard the aircraft, as known to those of skill in the art. Due to various considerations, Halon is being phased out of use in aircraft fire suppression systems (e.g., due to its high ozone depletion potential and global warming potential).

Inert gas may be utilized for fire suppression, and thus inert gas generated by an inerting system onboard an aircraft can be potentially used to generate a fire suppression gas. However, ASMs that are sized for fuel tank inerting have insufficient flow for aircraft fire suppression low rate of discharge (i.e., the second stage of aircraft fire suppression). In accordance with some examples of the present disclosure, improved performance of inert gas generation for aircraft fire suppression is provided, in addition to other benefits and features. In accordance with the present invention, membrane technology for air separation modules (ASM) is implemented to enable use of nitrogen-enriched air generated on-board instead of Halon for a Low Rate Discharge (LRD) phase that can be sustained for the duration of the flight, particularly for longer aircraft missions (e.g., extended-range twin-engine operations performance standards (ETOPS)).

In accordance with the present invention, Thermally Rearranged polymers ("TRPs") and/or Polymers of Intrinsic Microporosity ("PIMs"), generally referred to as "polymers having inherent microporosity", are used within the ASMs to enable high rate/volume generation of inert gas. Such polymers having inherent microporosity, when used in ASMs of the present disclosure, may provide up to ten times permeance and one and a half times selectivity compared to conventional membranes used in ASMs. TRPs are polymers having a structural rigidity formed during a thermal processing of the material to make the TRPs. PIMs are polymers that contain bulky and rigid groups from the start (i.e., no additional thermal processing required).

Conventional membranes are subject to performance decline over time during operation which has prevented adoption onboard aircraft, as reliability in the event of a fire could not be ensured. The degradation of such membranes can prevent sufficient inert gas generation for fire suppression. However, in accordance with the present invention the membranes with polymers having inherent microporosity are leveraged for limited purpose/limited use to provide large amounts of inert gas. The inert gas may be up to 15% oxygen, nitrogen-enriched air during LRD, although it may be beneficial to have less than 15% oxygen content (e.g., 5% oxygen content). By using a limited use/purpose system, longevity concerns may be eliminated. As such, the need for protective measures for membranes may be eliminated (e.g., use of filtration, operating temperature moderation, etc.).

In accordance with the present invention, a dedicated fire suppression ASM with a limited use membrane is provided. The ASM may be configured to provide LRD fire suppression onboard aircraft by generating an inert gas, such as 15% oxygen, nitrogen enriched air (concentration defined at sea level). Such a system may be lightweight yet high performing (e.g., improved permeance and selectivity). Having a high permeance of oxygen typically results in high permeance (and rejection) of nitrogen, which is undesirable as the nitrogen is the desired inert gas to be generated from the ASM. However, by tailoring a selectivity of the membrane, a high oxygen permeance with oxygen-nitrogen selectivity may provide a desired inert gas generation.

Permeance is the flux of a rejected gas (e.g., oxygen) through the membrane, normalized per membrane area and pressure. A gas permeance unit ("GPU") is defined as 1 GPU = 1×10⁻⁶ ×(cm³(STP)/cm²·cmHg·sec). By engineering the polymer such that the void spaces get larger, permeance will increase. However, if the void spaces are large enough for both gases to permeate through, then selectivity is lost for the particular pair of gases (permeates). Accordingly, through the use of polymers having inherent microporosity (e.g., TRPs and/or PIMs), the number of void spaces may be increased (thus increasing the permeance) but the size of such void spaces remain small to provide a control over which gas can permeate more easily (e.g., a smaller molecular size gas will permeate more easily than a larger molecular size gas). Conventional membranes have permeance ranges of between 20-80 GPU for oxygen, at the highest. In contrast, the polymers having inherent microporosity (e.g., TRPs and PIMs) of the present disclosure may have an oxygen permeance of 160 GPU or greater.

By measuring the oxygen permeance of a given membrane (in GPU) and dividing this value by a nitrogen permeance (in GPU) of the same membrane (e.g., measured separately under identical conditions), then the ratio is the O₂/N₂ selectivity of this membrane (referred to herein as "selectivity ratio"). The higher the selectivity ratio, the better, as this indicates that a greater quantity of O₂ is being rejected. The selectivity ratio is a unitless ratio that is a fundamental property of the particular membrane and is independent of pressure and membrane thickness (but varies with temperature, and thus usually refers to ambient temperature selectivity).

In the context of polymeric membranes configured to separate two permeates, selectivity is a property that quantifies how easily one permeate (e.g., oxygen) diffuses through the polymer in comparison to the other permeant (e.g., nitrogen). As such, selectivity depends not only on the polymer but also on the specific pair of permeants. For example, if both permeants are very small molecules with respect to the so-called "void space" (i.e., physical openings formed by the entanglement of polymer chains, also referred to as "microporosity"), then both permeates can easily diffuse through the polymeric membrane and thus the membrane is not particularly selective to either. However, the same membrane may exhibit very high selectivity for a pair of gases with sizes that happen to be very close to the average size of the void spaces in the polymer. The molecular size in the context of diffusion is called the "kinetic diameter" of the gas. In an example applicable to the current disclosure, the kinetic diameter of oxygen is 0.346 nm and the kinetic diameter of nitrogen is 0.364 nm. As such, a membrane formed with polymers having inherent microporosity (e.g., TRPs and PIMs) having microporosity (void spaces) with average size between these two values (e.g., between 0.346 nm and 0.364 nm) would selectively permeate oxygen over nitrogen (e.g., because oxygen has a smaller kinetic diameter than nitrogen). However, this same membrane would not have good selectivity for permeates of hydrogen and helium, which have kinetic diameters of 0.289 nm and 0.260 nm respectively. In this example, both hydrogen and helium have kinetic diameters lower than a microporosity of between 0.346-0.364 nm. As such, both permeates would be able to pass through the membrane without any selectivity.

As noted above, the membranes for ASMs, in accordance with the present invention, are formed from polymers having inherent microporosity (e.g., TRPs and PIMs). Such TRPs and PIMs can provide desired levels of permeance, to reject oxygen, while keeping high selectivity, to ensure the nitrogen is not rejected. In accordance with embodiments of the present disclosure, in order to have both high selectivity and permeance, the most desirable membranes would have a large number of void spaces (the more, the higher the permeance) sized between the kinetic diameters of oxygen and nitrogen (the closer to oxygen, the higher the selectivity). For example, in one non-limiting embodiment, a membrane having polymers having inherent microporosity, in accordance with an embodiment of the present disclosure, may have selectivity ratio of 6 or greater (e.g., 10, 12, 15, etc.) and an oxygen permeance of 100 GPU or greater (e.g., 120 GPU, 160 GPU, 200 GPU, etc.).

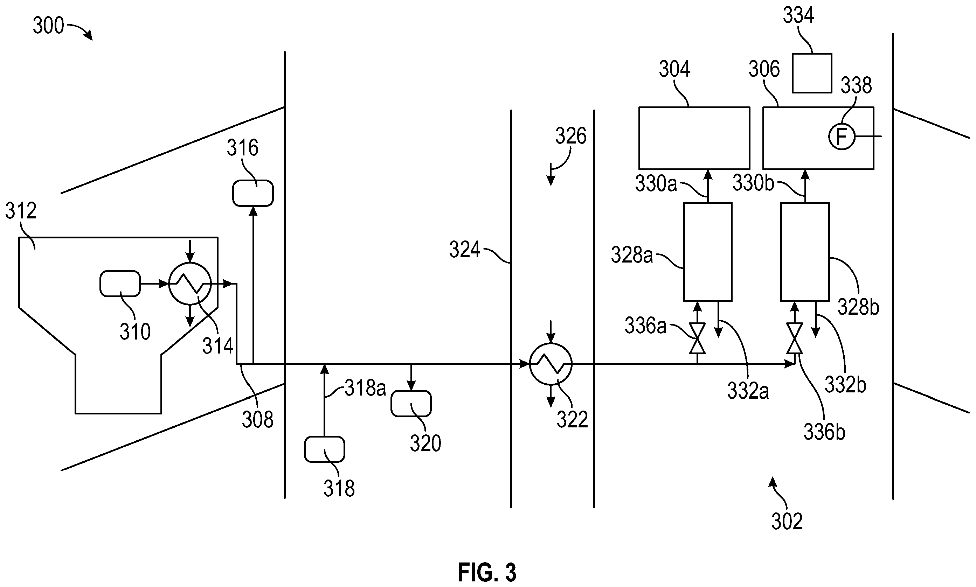

Referring now to FIG. 3, a schematic illustration of an aircraft 300 in accordance with an embodiment of the present disclosure is shown. The aircraft 300 includes an inerting system 302 that is configured to generate and supply inert gas a fuel tank 304 and a protected space 306 on the aircraft 300. The inerting system 302 includes a supply of pressurized air 308 provided (i.e., extracted) from a pressurized air source 310 which is employed to generate an inert gas. The inert gas may be fully inert (e.g., no oxygen content) or partially inert (e.g., low oxygen content, such as 15% or less). In the illustrated non-limiting embodiment, the pressurized air source 310 may be a compressor section of an engine 312 of the aircraft 300, or a bleed port thereof, as will be appreciated by those of skill in the art. Although illustrated as sourced from the engine 312, in other embodiments, the pressurized air source may be a dedicated compressor or other system onboard the aircraft 300 (e.g., an auxiliary power unit, or the like).

The pressurized air 308, sourced from the pressurized air source 310, may be cooled in a precooler 314 that receives fan air or other cooling air as a secondary cooling flow. In some configurations, a portion of the pressurized air 308 may be extracted and directed to a wing anti-ice system 316. The pressurized air 308 may then be optionally resupplied with additional pressurized air 318a, such as sourced from an auxiliary power unit 318. A portion of the pressurized air 308 may be directed to an aircraft environmental control system 320, as will be appreciated by those of skill in the art. The pressurized air 308 may then be further cooled in a cooling heat exchanger 322 which may be arranged, for example, in a ram air duct 324, to use ram air 326 (e.g., ambient air) to reduce the temperature of the pressurized air 308 to desired temperatures for inert gas generation. It will be appreciated that additional cooling mechanisms and systems (e.g., additional heat exchangers) may be used to further cool or adjust the temperature of the pressurized air 308 prior to suppling the pressurized air 308 to an air separation membrane.

As shown in FIG. 3, and in accordance with embodiments of the present disclosure, the aircraft 300, and more specifically the inerting system 302 includes two air separation membranes ("ASM") 328a, 328b. In this illustrative configuration, a fuel tank ASM 328a is arranged to receive at least a portion of the pressurized air 308 and process it into an inert gas 330a and oxygen 332a. That is, the fuel tank ASM 328a is configured to receive the pressurized air 308 and separate the oxygen 332a from the pressurized air 308 to generate the inert gas 330a. The inert gas 330a generated at the fuel tank ASM 328a is directed into the fuel tank 304 to fill an ullage space thereof. In this embodiment, the inerting system 302 also includes a fire suppression ASM 328b. The fire suppression ASM 328b is configured to receive the pressurized air 308 and convert such air into oxygen 332b and inert gas 330b. The inert gas 330b generated by the fire suppression ASM 328b is able to be directed into the protected space 306.

To control which ASM 328a, 328b is supplied with the pressurized air 308, a controller 334 is arranged in communication with valves 336a, 336b, which can be selectively operated to permit some or all of the pressurized air 308 to be delivered to the ASMs 328a, 328b. For example, during normal operation (e.g., no detected fire), a fire suppression valve 332b may be maintained in a closed state such that none of the pressurized air 308 is provided into the fire suppression ASM 328b. That is, normally, the fire suppression ASM 328b is not used or maintained in a standby or off state. At the same time, the controller 334 causes all or most of the pressurized air 308 to be directed into the fuel tank ASM 328a to generate the inert gas 330a to be supplied into the fuel tank 304. However, in the event of a fire detected in the protected space 306 (e.g., by a fire detector 338), the controller 334 may open the fire suppression valve 336b to direct some or all of the pressurized air 308 to the fire suppression ASM 328b. In some operations, the controller 334 may fully close a fuel tank valve 336a such that all pressurized air 308 is supplied into the fire suppression ASM 328b.

The fire suppression ASM 328b may be configured to generate a sufficient amount of inert gas to provide a low-rate discharge LRD for fire suppression in the protected space 306. To achieve the necessary amount of inert gas generation, the fire suppression ASM 328b may be configured differently than a conventional ASM, and may be different from the fuel tank ASM 328a. In accordance with embodiments of the present disclosure, the fire suppression ASM 328b may include polymers having inherent microporosity (e.g., TRPs or PIMs). These polymers of high inherent microporosity may be formed from, for example, and without limitation, polymers containing heterocyclic benzoxazole or similar rings formed after thermal treatment of an ortho-hydroxy imide ring or polymers bulky side-units such as cardo- and spiro-monomers that lead to tetrahedral, rigid linkages. The use of polymers with high inherent microporosity (e.g., TRPs, PIMs) allows for highly efficient, high throughput inert gas generation in the fire suppression ASM 328b, thus providing for sufficient inert gas generation for a low rate discharge (LRD) for fire suppression onboard an aircraft. It will be appreciated that, in some aircraft configurations, the leakage rate of a typical cargo bay is on the order of 80cfm STP, and the ASMs of the present disclosure (e.g., TRPs and/or PIMs) are capable of replacing that leakage with nitrogen-enriched air.

In accordance with some embodiments, the fire suppression ASM 328b provides the LRD for the fire suppression, while the immediate knock-down of an HRD is provided from a convention HRD system (e.g., Halon, water, chemical dispersants, and the like). The controller 334 may be configured to control operation of the HRD, in part, or work in conjunction with a fire suppression controller that directly controls the HRD system.

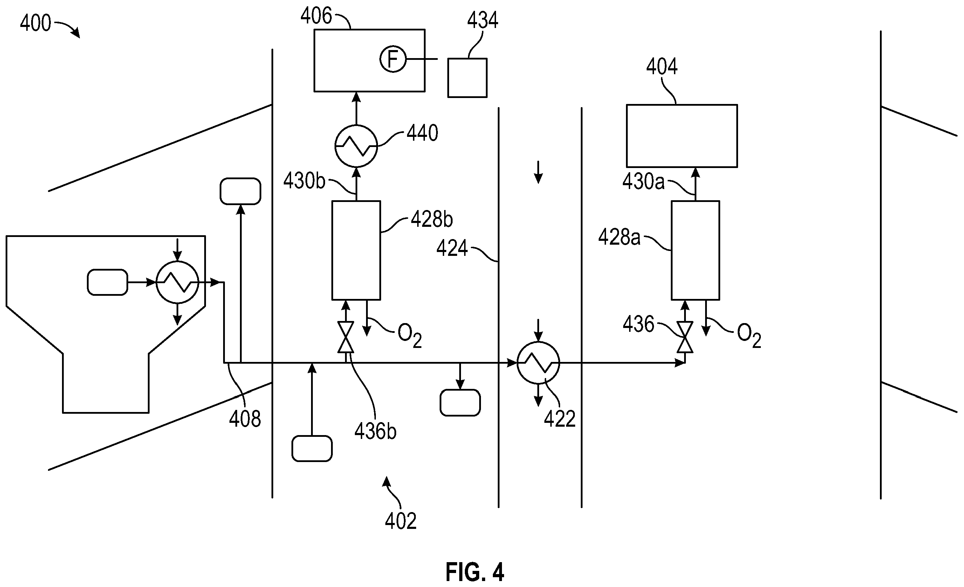

Referring now to FIG. 4, a schematic illustration of an aircraft 400 in accordance with an embodiment of the present disclosure is shown. The aircraft 400 includes an inerting system 402 that is configured to generate and supply inert gas a fuel tank 404 and a protected space 406 on the aircraft 400. The inerting system 402 includes a supply of pressurized air 408 provided (i.e., extracted) from a pressurized air source which is employed to generate an inert gas. The aircraft 400 and inerting system 402 of FIG. 4 includes a number of similar components as that shown and described above with respect to FIG. 3, and thus repeated labels and descriptions will be omitted.

In this embodiment, a fire suppression ASM 428b is arranged upstream from a cooling heat exchanger 422 which is arranged in a ram air duct 424. As such, when a respective fire suppression valve 436b is opened, relatively hotter air is provided to the fire suppression ASM 428b as compared to the configuration of FIG. 3. In some embodiments, rather than air that is approximately 180 °F (82°C) (e.g., as in the embodiment of FIG. 3), the pressurized air 408 supplied to the fire suppression ASM 428b of FIG. 4 may be at temperatures at about 300 °F (149°C). In this configuration, an optional product gas cooler 440 may be provided to reduce the temperature of the inert gas 430b prior to being used for fire suppression. That is, an optional product gas cooler 440 may be arranged between the fire suppression ASM 428b and the protected space 406. It will be appreciated that a similar product gas cooler may be used in the embodiment of FIG. 3. In some embodiments, the higher temperature pressurized gas 408 may provide advantages in terms of the inert gas generation efficiency of the fire suppression ASM 428b. As shown, when the fire suppression ASM 428b is not in operation, the fire suppression valve 436b may be closed and controlled by a controller 434, and the pressurized gas 408 may pass through the cooling heat exchanger 422 to the ASM 428a for generation of inert gas 430a to be supplied into the fuel tank 404.

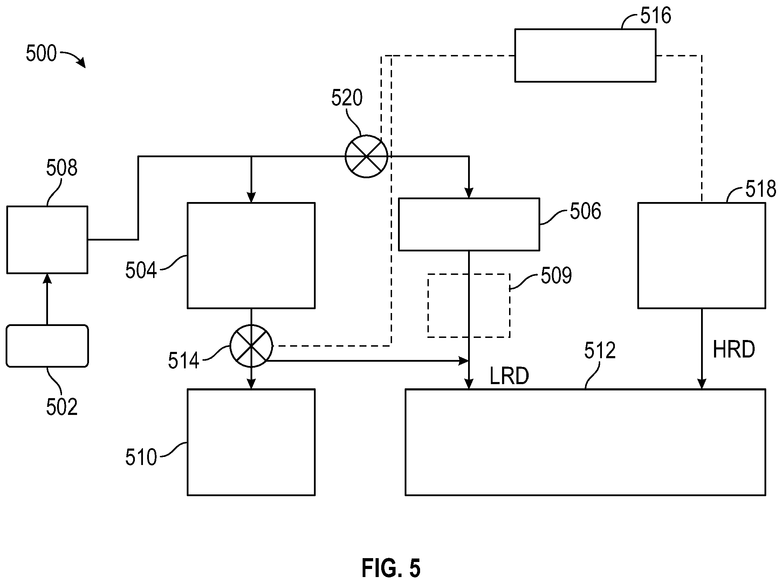

Turning now to FIG. 5, a schematic diagram of operation of an inerting system 500 in accordance with an embodiment of the present disclosure is shown. The operation described with respect to FIG. 5 may be implemented in one or more of the above-described embodiments or variations thereon. The configuration of the inerting system 500 may include elements not previously described, but such components or arrangements may be implemented into the above-described embodiments, without varying the scope of the present invention as defined by the appended claims. The inerting system 500 includes a pressurized air source 502 that supplies pressurized air to two separate ASMs 504, 506. The pressurized air may be precooled in a heat exchanger 508. The inert gas generated at the ASMs 504, 506 may be selectively directed to a fuel tank 510 and/or a protected space 512.

During a first state of operation (e.g., normal mode or no detected fire), the pressurized air is directed to a first ASM 504 (e.g., fuel tank ASM) that is configured to generate inert gas to be provided to the fuel tank 510, such as to fill a fuel tank ullage. In the first state of operation, a first valve 514 (e.g., fuel tank valve) associated with the first ASM 504 is actuated to direct the inert gas generated in the first ASM 504 to the fuel tank 510. In response to a detected fire or other similar event in the protected space 512, a controller 516 may cause a high rate discharge system 518 to dispense a fire suppression suppressant to knock down a fire or the like within the protected space 512. In some embodiments, the high rate discharge system 518 may use Halon or other similar high rate discharge fire suppressant material, as known in the art. After the HRD operation is performed, the controller 516 may cause an LRD operation to be performed to supply an inert gas into the protected space 512 to prevent reignition of the fire and maintain the protected space 512 in a safe condition during a flight operation.

To cause the LRD operation, the inerting system 500 is transitioned to a second state of operation (e.g., fire suppression mode). In the second state of operation, the controller 516 will open a second valve 520 (e.g., fire suppression valve) to allow for at least a portion of the pressurized air to be directed to a second ASM 506 (e.g., fire suppression ASM). In some embodiments, 100% of the pressurized air may be directed to the second ASM 506. In such an operation, the first valve 514 may be fully closed to prevent flow to the fuel tank 510 and all pressurized air is directed to the second ASM 506 to supply the inert gas during the LRD operation. In other embodiments, less than 100% of the pressurized air is directed to the second ASM 506 during the second state of operation. In such an embodiment, the second valve 520 may be opened to direct pressurized air to the second ASM 506 to generate inert gas. At the same time, a portion of the pressurized gas may be continued to be supplied to the first ASM 504 to continue to generate inert gas. The inert gas of the first ASM 504, during such second state of operation, may be directed into an LRD supply stream, and only a small portion of the inert gas may be supplied into the fuel tank 510, or even, in some embodiments, the first valve 514 may be operated to direct all inert gas generated by the first ASM 504 to the assist the LRD operation.

The second ASM 506 may be an ASM having polymers having inherent microporosity (e.g., TRP or PIM), which may have a permeance that is ten times greater than the permeance of the first ASM 504, which may comprise polyimides. Further, ASM having polymers having inherent microporosity of the second ASM may have a selectivity that is one and half times greater than the polyimide structure and composition of the first ASM. In some embodiments, such as when both the first and second ASMs 504, 506 are simultaneously used for fire suppression (LRD), the heat exchanger 508 may be oversized, compared to a conventional heat exchanger for only fuel tank inerting. However, such increased size of the heat exchanger 508 may negatively impact normal fuel tank inerting operations, and thus an optional product gas cooler 509 may be provided to cool the low-rate discharge inert gas to near ambient temperatures for dispensing into the protected space 512. This oversized heat exchanger 508 may be configured to provide sufficient pressurized air to each of the ASMs 504, 506 in the event of a fire emergency in the protected space 512. This combination of ASM operation may provide sufficient flow requirements for LRD operations. For example, in an LRD operation, a steady state of inert gas supply into a protected space may be about 80 SCFM (standard cubic feet per minute (2.26 cubic meter)). In the dual-operation configuration illustrated in FIG. 5, the first ASM 504 may provide about 50 SCFM 1.41 cubic meter). This may be augmented by operation of the second ASM 506, which can output an additional 30 SCFM (0.85 cubic meter), thus providing sufficient flow rate of inert gas to maintain the LRD operation at about 80 SCFM (2.26 cubic meter).

In accordance with embodiments of the present disclosure, inerting systems for aircraft are provided with two dedicated ASMs, one for fuel tank inerting and one for fire suppression inerting operations. The fuel tank inerting system may be a conventional ASM, which may be operated for thousands of hours without replacement or repair. Such fuel tank ASM may be an ASM having high-selectivity, and moderate-permeance membranes. The materials of these membranes are selected for reliability and product life. For example, in some non-limiting embodiments, the materials may be selected from polyimides, polysulfones, and poly-phenylene oxides. In contrast, the fire suppression ASM of embodiments of the present disclosure is designed for high efficiency, short term inert gas generation, and is formed from polymers having inherent microporosity (e.g., TRPs and/or PIMs) which can provide for high rates of inert gas generation over a relatively short period of time. As a result of this, the fire suppression ASM embodiments of the present disclosure may, in some embodiment, have a limited lifetime relative to the fuel tank ASM. As noted, the fuel tank ASM may have a life of thousands of hours. In contrast, the fire suppression ASM may have a life of hundreds of hours. As a result, the fire suppression ASM may require replacement more often than the fuel tank ASM. However, this limited life/use provides certain advantages over alternative fire suppression systems.

For example, in a conventional fire suppression system, both the HRD and LRD operations are implemented using Halon or other similar chemical knockdown and fire suppression materials and compounds. Halon systems are bulky and thus have negative impacts on aviation (e.g., volume and weight are very limited in aircraft applications). However, due to the nature of the systems (i.e., for fire emergencies), these Halon systems have been used out of necessity. In current systems, for example, a Halon-based system for LRD operations may require multiple containers to be stored onboard the aircraft, in order to ensure sufficient Halon is available for fire suppression. In a non-limiting example of a current Halon-based LRD system, three containers of Halon may be arranged onboard the aircraft. Each Halon container may weigh between 80 and 95 pounds (36.3 and 43.1 kg) and, in combination with supporting components (e.g., filter regulator and the like), may add approximately 260-290 pounds (117.3-131.5 kg) to an aircraft (not including mounting hardware and/or tubing and the like).

In contrast, in an illustrative, non-limiting example, the thermally rearranged polymer ASMs described herein, for use as LRD components for fire suppression, may employ two membranes having polymers having inherent microporosity (e.g., TRP, PIM). Each membrane having polymers having inherent microporosity may weigh about 15 pounds (6.8 kg). The supporting components, such as the increased size or oversized pressurized gas heat exchanger and the control components (e.g., ram control, flow control, valves, etc.) may provide an additional 70 pounds (31.7 kg) of weight to the system. As a result, the total weight of an inerting system as described herein may be about 100 pounds (45.3 kg). As such, by implementing an inert gas generation fire suppression system in accordance with embodiments of the present disclosure may provide for a reduction in fire suppression system weight of about 150-200 pounds (68.0-90.7 kg) (in this example), for the same fire suppression capability.

Advantageously, embodiments of the present disclosure are directed to improved aircraft fire suppression systems that provide for use of Halon alternatives during fire suppression operations onboard the aircraft. Through use of a dedicated ASM as part of the fire suppression system, the aircraft inert gas generation systems may be multipurposed to provide fuel tank inerting during normal operation and switch to a high throughput operation during a fire emergency by operation of the dedicated ASM. The dedicated ASM of the fire suppression system is configured differently from the fuel tank inerting ASM. For example, the fuel tank ASM may be made of one or more membranes formed from polyimides. The polyimides have long life and consistent and reliable inert gas generation properties. In contrast, the fire suppression ASM is made of one or more membranes formed from polymers having inherent microporosity (e.g., TRP, PIM). The air separation membranes having polymers having inherent microporosity may have a shorter life as compared to convention air separation membranes, but are capable of higher permeance (e.g., up to 10 times polyimide membranes) and higher selectivity (e.g., up to 1.5 times polyimide membranes). The ASMs with polymers having inherent microporosity may be leveraged as single-use or limited-use solutions to provide large amount of nitrogen enriched air (e.g., 12-15% O₂) as an inert gas to support LRD fire suppression operations. Because the intent of such systems is to have a limited use, the ASM with polymers having inherent microporosity may not include typical membrane-saving elements (e.g., filtration, temperature control, etc.). Through use of the ASMs having polymers having inherent microporosity described herein, a Halon-replacement solution for fire suppression is provided. Such systems provide benefits in weight saving, reduction in carrying of Halon or other adverse chemicals, and leverages existing systems (e.g., no need for additional containers to carrying a fire suppressant).

The use of the terms "a", "an", "the", and similar references in the context of description (especially in the context of the following claims) are to be construed to cover both the singular and the plural, unless otherwise indicated herein or specifically contradicted by context. The modifier "about" used in connection with a quantity is inclusive of the stated value and has the meaning dictated by the context (e.g., it includes the degree of error associated with measurement of the particular quantity). All ranges disclosed herein are inclusive of the endpoints, and the endpoints are independently combinable with each other. As used herein, the terms "about" and "substantially" are intended to include the degree of error associated with measurement of the particular quantity based upon the equipment available at the time of filing the application. For example, the terms may include a range of ± 8%, or 5%, or 2% of a given value or other percentage change as will be appreciated by those of skill in the art for the particular measurement and/or dimensions referred to herein. It should be appreciated that relative positional terms such as "forward," "aft," "upper," "lower," "above," "below," and the like are with reference to normal operational attitude and should not be considered otherwise limiting.

While the present disclosure has been described with reference to an exemplary embodiment or embodiments, it will be understood by those skilled in the art that various changes may be made without departing from the scope of the present invention as defined by the appended claims. Therefore, it is intended that the present disclosure not be limited to the particular embodiment disclosed as the best mode contemplated for carrying out this present disclosure, but that the present disclosure will include all embodiments falling within the scope of the claims.

## Claims

1. A fire suppression system for an aircraft, the fire suppression system comprising:
a pressurized air source (310, 502);
a first air separation module (328a, 428a, 504) configured to receive pressurized air from the pressurized air source, the first air separation module arranged to generate inert gas (330a, 430b) from the received pressurized air and supply the generated inert gas to a fuel tank (304, 404, 510) of the aircraft;
a second air separation module (328b, 428b, 506) configured to receive pressurized air from the pressurized air source, the second air separation module arranged to generate inert gas from the received pressurize air and supply the generated inert gas to a protected space (306) of the aircraft, wherein the second air separation module comprises a membrane having inherent microporosity; and
a controller (334, 434, 516) in operable communication with each of the first air separation module and the second air separation module, the controller configured to:
direct the pressurized air to the first air separation module and direct no pressurized air to the second air separation module during a first state of operation, and
in response to a fire detected in the protected space, direct at least a portion of the pressurized air to the second air separation module and supply an inert gas (332a) from the second air separation module to the protected space in a second state of operation.

2. The fire suppression system of claim 1, wherein the first air separation module (328a, 428a, 504) comprises at least one of a polyimide membrane, a polysulfone membrane, or a poly-phenylene membrane.

3. The fire suppression system of claim 1 or 2, wherein the controller (334, 434) is configured to control a first valve (336a, 436) configured to control flow of pressurized air to the first air separation module and a second valve (336b, 436b) configured to control flow of pressurized air to the second air separation module.

4. The fire suppression system of any preceding claim, wherein the second state of operation is a low rate discharge fire suppression operation.

5. The fire suppression system of any preceding claim, further comprising a product gas cooler (440) arranged between the second air separation module (428b) and the protected space (406).

6. The fire suppression system of any preceding claim, further comprising a cooling heat exchanger (322, 422) arranged between the pressurized air source and the first air separation module; preferably wherein the second air separation module is arranged upstream from the cooling heat exchanger, or wherein the second air separation module is arranged downstream from the cooling heat exchanger.

7. The fire suppression system of any preceding claim, wherein the pressurized air source (310) is a portion of an engine (312_ of the aircraft, the system comprising a precooler (314) arranged between the pressurized air source and each of the first air separation module and the second air separation module.

8. The fire suppression system of any preceding claim, wherein the membrane having inherent microporosity has at least one of (i) an oxygen permeance of 100 GPU or greater or (ii) a selectivity ratio of 6 or greater, the selectivity ratio being the oxygen permeance (in GPU) of the membrane divided by a nitrogen permeance (in GPU) of the membrane.

9. The fire suppression system of any preceding claim, wherein the membrane having inherent microporosity comprises a membrane formed from Thermally Rearranged polymers.

10. The fire suppression system of any preceding claim, wherein the membrane having inherent microporosity comprises a membrane formed from Polymers of Intrinsic Microporosity.

11. The fire suppression system of any preceding claim,
wherein, in the second state of operation, the controller (334, 434, 516) is configured to direct a portion of the pressurized air to the first air separation module and a portion of the pressurized air to the second air separation module; preferably wherein an inert gas generated by the first air separation module (504) is mixed with an inert gas generated by the second air separation module prior to being supplied to the protected space.

12. The fire suppression system of any preceding claim, further comprising a high rate discharge system (518) comprising Halon to be dispensed into the protected space in response to the fire detection; preferably
wherein after performing a high rate discharge operation using the high rate discharge system, the second air separation module is controlled to direct inert gas to the protected space in a low rate discharge operation.

13. The fire suppression system of any preceding claim, wherein the inert gas generated by the second air separation module has an oxygen content of 15% or less.

14. A method of supplying inerting gas to a fire-protected space of an aircraft for fire suppression, the method comprising:
extracting pressurized air from a pressurized air source (310, 502);
directing the pressurized air to a first air separation module (328a, 428a, 504) configured to generate inert gas and supply the generated inert gas to a fuel tank of the aircraft during a first state of operation; and
in response to a fire detected in a protected space of the aircraft, directing at least a portion of the pressurized air to a second air separation module (328b, 428b, 506) and supplying an inert gas from the second air separation module to the protected space in a second state of operation, wherein the second air separation module comprises a membrane having inherent microporosity.

15. The method of claim 14, wherein, in the second state of operation, the method comprises directing a portion of the pressurized air to the first air separation module and a portion of the pressurized air to the second air separation module; and/or
the method further comprising performing a high rate discharge operation in response to the detected fire prior to operating the second air separation module.

## Patentansprüche

1. Brandunterdrückungssystem für ein Flugzeug, wobei das Brandunterdrückungssystem Folgendes umfasst:
eine Druckluftquelle (310, 502);
ein erstes Lufttrennungsmodul (328a, 428a, 504), das zum Aufnehmen von Druckluft von der Druckluftquelle konfiguriert ist, wobei das erste Lufttrennungsmodul zum Erzeugen von Inertgas (330a, 430b) aus der aufgenommenen Druckluft und Zuführen des erzeugten Inertgases zu einem Treibstofftank (304, 404, 510) des Flugzeugs angeordnet ist;
ein zweites Lufttrennungsmodul (328b, 428b, 506), das zum Aufnehmen von Druckluft von der Druckluftquelle konfiguriert ist, wobei das zweite Lufttrennungsmodul zum Erzeugen von Inertgas aus der aufgenommenen Druckluft und Zuführen des erzeugten Inertgases zu einem geschützten Raum (306) des Flugzeugs angeordnet ist, wobei das zweite Lufttrennungsmodul eine inhärente Mikroporosität aufweisende Membran umfasst; und
eine Steuerung (334, 434, 516) in Wirkverbindung mit jedem des ersten Luftrennungsmoduls und des zweiten Luftrennungsmoduls, wobei die Steuerung zu Folgendem konfiguriert ist:
Leiten der Druckluft zu dem ersten Lufttrennungsmodul und Leiten keiner Druckluft zu dem zweiten Lufttrennungsmodul während eines ersten Betriebszustands und
als Reaktion auf ein in dem geschützten Raum erkanntes Feuer Leiten von mindestens einem Teil der Druckluft zu dem zweiten Lufttrennungsmodul und Zuführen eines Inertgases (332a) von dem zweiten Lufttrennungsmodul zu dem geschützten Raum in einem zweiten Betriebszustand.

2. Brandunterdrückungssystem nach Anspruch 1, wobei das erste Lufttrennungsmodul (328a, 428a, 504) mindestens eines von einer Polyimidmembran, einer Polysulfonmembran oder einer Polyphenylenmembran umfasst.

3. Brandunterdrückungssystem nach Anspruch 1 oder 2, wobei die Steuerung (334, 434) zum Steuern eines ersten Ventils (336a, 436), das zum Steuern des Druckluftstroms zu dem ersten Lufttrennungsmodul konfiguriert ist, und eines zweiten Ventils (336b, 436b) konfiguriert ist, das zum Steuern des Druckluftstroms zu dem zweiten Lufttrennungsmodul konfiguriert ist.

4. Brandunterdrückungssystem nach einem der vorhergehenden Ansprüche, wobei der zweite Betriebszustand ein Brandunterdrückungsbetrieb mit langsamer Abgabe ist.

5. Brandunterdrückungssystem nach einem der vorhergehenden Ansprüche, ferner umfassend einen Produktgaskühler (440), der zwischen dem zweiten Lufttrennungsmodul (428b) und dem geschützten Raum (406) angeordnet ist.

6. Brandunterdrückungssystem nach einem der vorhergehenden Ansprüche, ferner umfassend einen Kühlwärmetauscher (322, 422), der zwischen der Druckluftquelle und dem ersten Lufttrennungsmodul angeordnet ist; wobei das zweite Lufttrennungsmodul vorzugsweise stromaufwärts von dem Kühlwärmetauscher angeordnet ist oder wobei das zweite Lufttrennungsmodul stromabwärts von dem Kühlwärmetauscher angeordnet ist.

7. Brandunterdrückungssystem nach einem der vorhergehenden Ansprüche, wobei die Druckluftquelle (310) ein Teil eines Triebwerks (312) des Flugzeugs ist, wobei das System einen Vorkühler (314) umfasst, der zwischen der Druckluftquelle und jedem des ersten Lufttrennungsmoduls und des zweiten Lufttrennungsmoduls angeordnet ist.

8. Brandunterdrückungssystem nach einem der vorhergehenden Ansprüche, wobei die inhärente Mikroporosität aufweisende Membran mindestens eines von (i) einer Sauerstoffdurchlässigkeit von 100 GPU oder mehr oder (ii) einem Selektivitätsverhältnis von 6 oder mehr aufweist, wobei das Selektivitätsverhältnis die Sauerstoffdurchlässigkeit (in GPU) der Membran dividiert durch die Stickstoffdurchlässigkeit (in GPU) der Membran ist.

9. Brandunterdrückungssystem nach einem der vorhergehenden Ansprüche, wobei die inhärente Mikroporosität aufweisende Membran eine Membran umfasst, die aus thermisch umgelagerten Polymeren ausgebildet ist.

10. Brandunterdrückungssystem nach einem der vorhergehenden Ansprüche, wobei die inhärente Mikroporosität aufweisende Membran eine Membran umfasst, die aus Polymeren mit intrinsischer Mikroporosität ausgebildet ist.

11. Brandunterdrückungssystem nach einem der vorhergehenden Ansprüche,
wobei die Steuerung (334, 434, 516) in dem zweiten Betriebszustand zum Leiten eines Teils der Druckluft zu dem ersten Lufttrennungsmodul und eines Teils der Druckluft zu dem zweiten Lufttrennungsmodul konfiguriert ist; wobei ein von dem ersten Lufttrennungsmodul (504) erzeugtes Inertgas vor dem Zuführen zu dem geschützten Raum vorzugsweise mit einem von dem zweiten Lufttrennungsmodul erzeugten Inertgas gemischt wird.

12. Brandunterdrückungssystem nach einem der vorhergehenden Ansprüche, ferner umfassend ein System mit schneller Abgabe (518), das Halon umfasst, das als Reaktion auf die Branderkennung in den geschützten Raum abgegeben wird; vorzugsweise
wobei das zweite Lufttrennungsmodul nach Durchführen eines Betriebs mit schneller Abgabe unter Verwendung des Systems mit schneller Abgabe zum Leiten von Inertgas in den geschützten Raum während eines Betriebs mit langsamer Abgabe gesteuert wird.

13. Brandunterdrückungssystem nach einem der vorhergehenden Ansprüche, wobei das von dem zweiten Lufttrennungsmodul erzeugte Inertgas einen Sauerstoffgehalt von 15 % oder weniger aufweist.

14. Verfahren zum Zuführen von Inertgas zu einem feuergeschützten Raum eines Flugzeugs zur Brandunterdrückung, wobei das Verfahren Folgendes umfasst:
Extrahieren von Druckluft aus der Druckluftquelle (310, 502);
Leiten der Druckluft zu einem ersten Lufttrennungsmodul (328a, 428a, 504), das zum Erzeugen von Inertgas und Zuführen des erzeugten Inertgases zu einem Treibstofftank des Flugzeugs während eines ersten Betriebszustands konfiguriert ist; und
als Reaktion auf ein in einem geschützten Raum des Flugzeugs erkanntes Feuer Leiten von mindestens einem Teil der Druckluft zu einem zweiten Lufttrennungsmodul (328b, 428b, 506) und Zuführen eines Inertgases von dem zweiten Lufttrennungsmodul zu dem geschützten Raum in einem zweiten Betriebszustand, wobei das zweite Lufttrennungsmodul eine inhärente Mikroporosität aufweisende Membran umfasst.

15. Verfahren nach Anspruch 14, wobei das Verfahren in dem zweiten Betriebszustand Leiten eines Teils der Druckluft zu dem ersten Lufttrennungsmodul und eines Teils der Druckluft zu dem zweiten Lufttrennungsmodul umfasst; und/oder
wobei das Verfahren ferner Durchführen eines Betriebs mit schneller Abgabe als Reaktion auf das erkannte Feuer vor dem Betreiben des zweiten Lufttrennungsmoduls umfasst.

## Revendications

1. Système d'extinction d'incendie d'aéronef, le système d'extinction d'incendie comprenant :
une source d'air sous pression (310, 502) ;
un premier module de séparation d'air (328a, 428a, 504) configuré pour recevoir de l'air sous pression provenant de la source d'air sous pression, le premier module de séparation d'air étant agencé pour générer du gaz inerte (330a, 430b) à partir de l'air sous pression reçu et fournir le gaz inerte généré à un réservoir de carburant (304, 404, 510) de l'aéronef ;
un second module de séparation d'air (328b, 428b, 506) configuré pour recevoir de l'air sous pression provenant de la source d'air sous pression, le second module de séparation d'air étant agencé pour générer un gaz inerte à partir de l'air sous pression reçu et fournir le gaz inerte généré à un espace protégé (306) de l'aéronef, dans lequel le second module de séparation d'air comprend une membrane ayant une microporosité inhérente ; et
un dispositif de commande (334, 434, 516) en communication fonctionnelle avec chacun des premier et second modules de séparation d'air, le dispositif de commande étant configuré pour :
diriger l'air sous pression vers le premier module de séparation d'air et ne diriger aucun air sous pression vers le second module de séparation d'air pendant un premier état de fonctionnement, et
en réponse à un incendie détecté dans l'espace protégé, diriger au moins une partie de l'air sous pression vers le second module de séparation d'air et fournir un gaz inerte (332a) du second module de séparation d'air à l'espace protégé dans un second état de fonctionnement.

2. Système d'extinction d'incendie selon la revendication 1, dans lequel le premier module de séparation d'air (328a, 428a, 504) comprend au moins une parmi une membrane en polyimide, une membrane en polysulfone ou une membrane en polyphénylène.

3. Système d'extinction d'incendie selon la revendication 1 ou 2, dans lequel le dispositif de commande (334, 434) est configuré pour commander une première vanne (336a, 436) configurée pour commander le flux d'air sous pression vers le premier module de séparation d'air et une seconde vanne (336b, 436b) configurée pour commander le flux d'air sous pression vers le second module de séparation d'air.

4. Système d'extinction d'incendie selon une quelconque revendication précédente, dans lequel le second état de fonctionnement est une opération d'extinction d'incendie à faible débit de décharge.

5. Système d'extinction d'incendie selon une quelconque revendication précédente, comprenant également un refroidisseur de gaz produit (440) agencé entre le second module de séparation d'air (428b) et l'espace protégé (406).

6. Système d'extinction d'incendie selon une quelconque revendication précédente, comprenant également un échangeur de chaleur de refroidissement (322, 422) agencé entre la source d'air sous pression et le premier module de séparation d'air ; de préférence, dans lequel le second module de séparation d'air est agencé en amont de l'échangeur de chaleur de refroidissement, dans lequel le second module de séparation d'air est agencé en aval de l'échangeur de chaleur de refroidissement.

7. Système d'extinction d'incendie selon une quelconque revendication précédente, dans lequel la source d'air sous pression (310) est une partie d'un moteur (312_ de l'aéronef, le système comprenant un prérefroidisseur (314) agencé entre la source d'air sous pression et chacun du premier module de séparation d'air et du second module de séparation d'air.

8. Système d'extinction d'incendie selon une quelconque revendication précédente, dans lequel la membrane ayant une microporosité inhérente a au moins l'un parmi (i) une perméance à l'oxygène de 100 GPU ou plus ou (ii) un rapport de sélectivité de 6 ou plus, le rapport de sélectivité étant la perméance à l'oxygène (en GPU) de la membrane divisée par une perméance à l'azote (en GPU) de la membrane.

9. Système d'extinction d'incendie selon une quelconque revendication précédente, dans lequel la membrane ayant une microporosité inhérente comprend une membrane formée à partir de polymères réagencés thermiquement.

10. Système d'extinction d'incendie selon une quelconque revendication précédente, dans lequel la membrane ayant une microporosité inhérente comprend une membrane formée à partir de polymères de microporosité intrinsèque.

11. Système d'extinction d'incendie selon une quelconque revendication précédente,
dans lequel, dans le second état de fonctionnement, le dispositif de commande (334, 434, 516) est configuré pour diriger une partie de l'air sous pression vers le premier module de séparation d'air et une partie de l'air sous pression vers le second module de séparation d'air ; de préférence dans lequel un gaz inerte généré par le premier module de séparation d'air (504) est mélangé à un gaz inerte généré par le second module de séparation d'air avant d'être fourni à l'espace protégé.

12. Système d'extinction d'incendie selon une quelconque revendication précédente, comprenant également un système de décharge à haut débit (518) comprenant de l'Halon à distribuer dans l'espace protégé en réponse à la détection d'incendie ; de préférence
dans lequel, après avoir réalisé une opération de décharge à haut débit en utilisant le système de décharge à haut débit, le second module de séparation d'air est commandé pour diriger le gaz inerte vers l'espace protégé dans une opération de décharge à faible débit.

13. Système d'extinction d'incendie selon une quelconque revendication précédente, dans lequel le gaz inerte généré par le second module de séparation d'air a une teneur en oxygène de 15 % ou moins.

14. Procédé d'alimentation en gaz d'inertage d'un espace protégé contre l'incendie d'un aéronef pour l'extinction d'un incendie, le procédé comprenant :
l'extraction d'air sous pression de la source d'air sous pression (310, 502) ;
la direction d'air sous pression vers un premier module de séparation d'air (328a, 428a, 504) configuré pour générer du gaz inerte et fournir le gaz inerte généré à un réservoir de carburant de l'aéronef pendant un premier état de fonctionnement ; et
en réponse à un incendie détecté dans un espace protégé de l'aéronef, la direction d'au moins une partie de l'air sous pression vers un second module de séparation d'air (328b, 428b, 506) et la fourniture d'un gaz inerte provenant du second module de séparation d'air vers l'espace protégé dans un second état de fonctionnement, dans lequel le second module de séparation d'air comprend une membrane ayant une microporosité inhérente.

15. Procédé selon la revendication 14, dans lequel, dans le second état de fonctionnement, le procédé comprend l'envoi d'une partie de l'air sous pression vers le premier module de séparation d'air et d'une partie de l'air sous pression vers le second module de séparation d'air ; et/ou
le procédé comprenant également la réalisation d'une opération de décharge à haut débit en réponse à l'incendie détecté avant de faire fonctionner le second module de séparation d'air.
